# EUROPÄISCHE PATENTSCHRIFT

(11) **EP 1 917 291 B1**
(45) Veröffentlichungstag und Bekanntmachung des Hinweises auf die Patenterteilung: **07.01.2009**
(21) Anmeldenummer: 06754236.5
(22) Anmeldetag: 08.06.2006
(51) Int. Cl.: C08G 77/26, C08G 77/452

(54) **SILICIUM- UND POLYSILYLCYAMELURATE SOWIE -CYANURATE, VERFAHREN ZU DEREN HERSTELLUNG UND DEREN VERWENDUNG**
SILICON - AND POLYSILYL CYAMELURATES AS WELL AS - CYANURATES, METHODS FOR THE PRODUCTION THEREOF AND THEIR USE
CYAMELURATE ET CYANURATE DE SILICIUM ET DE POLYSILYLE, LEURS PROCEDES DE PRODUCTION ET LEUR UTILISATION

(30) Priorität: 13.06.2005 DE 102005027399
(43) Veröffentlichungstag der Anmeldung: 07.05.2008
(73) Patentinhaber: Zylum Beteiligungsgesellschaft mbH & Co. Patente II KG, 12529 Schönefeld / Waltersdorf (DE)
(72) Erfinder: KROKE, Edwin, Rolf, Balduin, 09599 Freiberg (DE); SCHWARZ, Marcus, Rolf, 09599 Freiberg (DE); EMAM ALY EL GAMEL, Nadia, 11461 Dawaween Cairo (EG)
(74) Vertreter: Zech, Stefan Markus
(86) Internationale Anmeldenummer: PCT/EP2006/005501
(87) Internationale Veröffentlichungsnummer: WO 2006/133849

(56) Entgegenhaltungen:
- EP-A- 0 654 497
- US-A- 6 018 044
- US-B2- 6 531 539
- DATABASE CA [Online] CHEMICAL ABSTRACTS SERVICE, COLUMBUS, OHIO, US; 1980, GORDETSOV, A. S. ET AL: "Synthesis of organotin derivatives of melam, melem, and cyamelluric acid" XP002402000 gefunden im STN Database accession no. 97:39048 & KHIMIYA ELEMENTOORGAN. SOEDIN., (GOR'KII) , (8), 59-61 FROM: REF. ZH., KHIM. 1982, ABSTR. NO. 5ZH636, 1980,
- DATABASE CA [Online] CHEMICAL ABSTRACTS SERVICE, COLUMBUS, OHIO, US; 1976, DERGUNOV, YU. I. ET AL: "Silylation and stannylation of cyameluric acid" XP002402001 gefunden im STN Database accession no. 1976:543228 & ZHURNAL OBSHCHEI KHIMII , 46(7), 1653-4 CODEN: ZOKHA4; ISSN: 0044-460X, 1976,

## Beschreibung

Die vorliegende Erfindung betrifft eine neuartige Verbindungsklasse von oligomeren und polymeren s-Triazin- und s-Heptazin-Derivaten und deren Verwendung als Zwischenstufe, z.B. als Vorläuferverbindungen (Precursoren) zur Herstellung von Si/(M)/C/N/(O) Keramiken, als mesoporöse Materialien wie z.B. Katalysatorträger, zur Gasspeicherung oder als stationäre Phase für die Chromatographie, als Flammschutzmittel, Kunstoffstadditive oder für sonstige organisch/anorganische Funktionsmaterialien.

In der russischen Publikation A.S. Gordetsov, Yu. I. Dergunov, N. K. Gavrilova, "Synthesis of organotin derivatives of melam, melem, and cyamelluric acid", Khimiya Elementoorgan. Soedin. (Gor'kii), 8 (1980), 59-61 (CAN 97:39048) wird die Synthese von Tris(trimethylsilyl)melem C₆N₇(NHSiMe₃)₃ aus Melem und Di(n-butyl)-trimethylsilylamin beschrieben. In Yu. I. Dergunov, A. S. Gordetsov, I. A. Vostokov, E. N. Boitsov, "Silylation and stannylation of cyameluric acid", Zhumal Obshchei Khimii, 46 (1976), 1653-4, wird die Synthese des Tris(trimethylsilyl)cyamelursäure-Esters C₆N₇(OSiMe₃)₃ beschrieben.

In zahlreichen Patenten wird die Anwendung von Heptazinderivaten als Komponente für feuerfeste bzw. schwer entflammbare Kunstoffformulierungen beansprucht. s-Triazinderivate sind wesentlich besser untersucht als die genannten s-Heptazinderivate. Anwendungsbereiche liegen z.B. in der Elektronik-, Kunststoff-, Holz- und Textilindustrie. Der s-Triazin-Ring findet sich darüber hinaus in unterschiedlichen pharmakologisch aktiven Substanzen. In der Literatur sind die folgenden drei siliciumhaltigen Verbindungen, molekulare Silylester der Cyanursäure (C₃N₃(OH)₃), bekannt: (C₃N₃(OSiMe₂(SiMe₃))₃), (C₃N₃(OSiMe₂H)₃) und (C₃N₃(OSiMe₃)₃).

Ein-, zwei- und dreidimensional ausgedehnte, kovalente Oligomere bzw. Polymere und Netzwerke auf Basis der C₆N₇-O-Si bzw. C₃N₃-O-Si Struktureinheiten sind bislang nicht bekannt.

Somit liegt der vorliegenden Erfindung die Aufgabe zugrunde, derartige Systeme erstmals zur Verfügung zu stellen.

Diese Aufgabe wird durch die in den Ansprüchen gekennzeichneten Ausführungsformen gelöst.

Insbesondere werden gemäß der vorliegenden Erfindung Oligomere bzw. Polymere bereitgestellt, umfassend mindestens eine Struktureinheit, ausgewählt aus der Gruppe, bestehend aus Siliciumcyanuraten, [Si₃(C₃N₃O₃)₄]ₙ, Siliciumcyameluraten, [Si₃(C₆N₇O₃)₄]ₙ, Silylcyanuraten, [Si(R^{a}R^{b})_{1,5}(C₃N₃O₃)]ₙ, Silylcyameluraten, [Si(R^{a}R^{b})_{1,5}(C₆N₇O₃)]ₙ, Silsesquicyanuraten, [Si(R^{a})(C₃N₃O₃)]ₙ, und Silsesquicyameluraten, [Si(R^{a})(C₆N₇O₃)]ₙ, wobei
n eine ganze Zahl zwischen 1 und ∞, vorzugsweise 1 bis 50.000, ist und
R^{a} und R^{b} unabhängig voneinander ausgewählt sind aus der Gruppe α, bestehend aus Wasserstoff, Halogen, Hydroxy, einem geradkettigen oder verzweigtkettigen (C₁-C₁₈)-Alkylrest, einem (C₃-C₇)-Cycloalkylrest, einem geradkettigen oder verzweigtkettigen (C₂-C₁₈)-Alkenylrest, einem geradkettigen oder verzweigtkettigen (C₂-C₁₈)-Alkinylrest, einem geradkettigen oder verzweigtkettigen (C₁-C₆)-Alkoxyrest, Furyl, Furanyl, Benzofuranyl, Thienyl, Thiazolyl, Benzothiazolyl, Thiadiazolyl, Imidazolyl, Pyrazolyl, Triazolyl, Tetrazolyl, Pyrazinyl, Pyrrolidinyl, Pyrimidinyl, Imidazolinyl, Pyrazolidinyl, Phenyl, Phenoxy, Benzyl, Benzyloxy, Naphthyl, Naphthoxy oder Pyridyl, die jeweils mit ein bis fünf Substituenten, unabhängig voneinander ausgewählt aus der Gruppe β, bestehend aus einem geradkettigen oder verzweigtkettigen (C₁-C₆)-Alkylrest, einem (C₃-C₇)-Cycloalkylrest, einem geradkettigen oder verzweigtkettigen (C₁-C₆)-Alkoxyrest, Halogen, Hydroxy, Amino, Di(C₁-C₆)alkylamino, Nitro, Cyan, Benzyl, 4-Methoxybenzyl, 4-Nitrobenzyl, Phenyl, und 4-Methoxyphenyl, substituiert sein können.

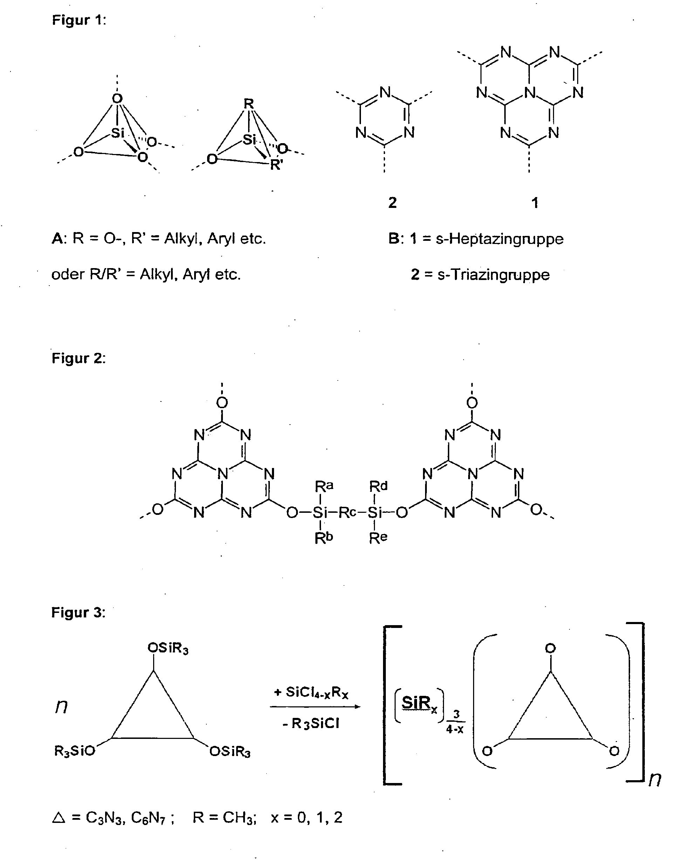

Die strukturbildenden Motive der erfindungsgemäßen Verbindungsklasse bzw. der von diesen abgeleiteten Netzwerke sind das s-Heptazinfragment (bzw. die Cyamelurat-Gruppe [C₆N₇O₃]³⁻], **1,** und/oder das analoge s-Triazinfragment (bzw. das Cyanurat-Strukturmotiv [C₃N₃O₃]³⁻) **2,** welche über siliciumhaltige Gruppen, vorzugsweise SiOₓR₄₋ₓ Tetraeder (mit x = 2, 3 oder 4 und R bzw. R' definiert wie vorstehend R^{a} und R^{b}, insbesondere ausgewählt aus einem geradkettigen oder verzweigtkettigen (C₁-C₆)-Alkylrest, einem (C₃-C₇)-Cycloalkylrest, einem geradkettigen oder verzweigtkettigen (C₂-C₆)-Alkenylrest, einem unsubstituierten oder substituierten C₆-C₁₀-Arylrest), verbrückt bzw. expandiert sind (vgl. Figur 1).

Beispiele der erfindungsgemäßen Verbindungsklasse sind unter Annahme einer idealisierten Polymerstöchiometrie:
- Siliciumcyamelurat und -cyanurat: Si₃(C₆N₇O₃)₄ **I** bzw. Si₃(C₃N₃O₃)₄ **II**
- die Silsesquiverbindungen: [RSi(C₆N₇O₃)]*ₙ* **III** und [RSi(C₃N₃O₃)]*ₙ* **IV**
- [(R²R^{b}Si)₃(C₆N₇O₃)₂]*ₙ* **V** und [(R^{a}R^{b}Si)₃(C₃N₃O₃)₂]*ₙ* **VI**
- beliebige Kombinationen aus **I** bis **VI.**

In einer Ausführungsform der vorliegenden Erfindung wird ein Oligomer bzw. Polymer bereitgestellt, welches eine siliciumzentrierte, dendritische Verbindung erster oder davon abgeleiteter höherer Generation ist, entsprechend Si[ΔR^{a}₂]₄, R^{a}-Si[ΔR^{b}₂]₃ oder R^{a}R^{b}Si[ΔR^{c}₂]₂, mit Δ = (C₃N₃O₃) Cyanurat oder (C₆N₇O₃) Cyanurat, wobei R^{a} und R^{b} wie vorstehend definiert sind und R^{c} wie R^{a} bzw. R^{b} definiert ist.

In einer weiteren Ausführungsform der vorliegenden Erfindung wird ein Oligomer bzw. Polymer bereitgestellt, welches eine cyanurat- oder cyameluratzentrierte, dendritische Verbindung erster oder davon abgeleiteter höherer Generation ist, entsprechend [Δ(SiR^{a}R^{b}R^{c})₃], [R^{a}(C₃N₃O₃)(SiR^{b}R^{c}R^{d})₂] oder [R^{a}(C₆N₇O₃)(SiR^{b}R^{c}R^{d})₂], mit Δ = (C₃N₃O₃) Cyanurat oder (C₆N₇O₃) Cyanurat, wobei R^{a}, R^{b}, R^{c} und R^{d} unabhängig voneinander wie vorstehend R^{a} und R^{b} definiert sind.

Unter Dendrimeren werden im Rahmen der vorliegenden Erfindung hoch geordnete, definiert verzweigte, oligomere bis polymere Verbindungen verstanden. Sie besitzen einen Initiatorkern, entweder cyanurat- bzw. cyameluratzentriert oder entsprechend siliziumzentriert - von dem ausgehend sich Verweigungseinheiten in alle Raumrichtungen erstrecken. Um den Initiatorkern der Kemfunktionalität bilden die Verzweigungseinheiten entsprechende Sphären, die Generationen genannt werden.

In noch einer weiteren Ausführungsform der vorliegenden Erfindung wird ein Oligomer bzw. Polymer bereitgestellt, welches ein derivatisiertes Silylcyanurat, ([Si(R^{a}R^{b})-R^{d}-Si(R^{e}R^{f})]_{1,5}[C₃N₃O₃])ₙ oder ein derivatisiertes Silylcyamelurat, ([Si(R^{a}R^{b})-R^{d}-Si(R^{e}R^{f})]_{1,5}[C₆N₇O₃])ₙ, ist, wobei n, R^{a} und R^{b} wie vorstehend definiert sind, R^{e} und R^{f} unabhängig voneinander wie vorstehend R^{a} und R^{b} definiert sind und wobei R^{d} für eine SiR^{a}R^{b} Gruppe, ein Chalkogenatom, insbesondere ein Sauerstoffatom, eine (C₁-C₆)-Alkylengruppe, insbesondere Methylen, eine (C₆-C₁₀)-Arylengruppe, insbesondere Phenylen, oder eine R^{g}X-Brücke (X = Element der dritten oder fünften Hauptgruppe und R^{g} ausgewählt aus Wasserstoff, Halogen, Hydroxy, einem geradkettigen oder verzweigtkettigen (C₁-C₁₈)-Alkylrest, einem (C₃-C₇)-Cycloalkylrest, einem geradkettigen oder verzweigtkettigen (C₂-C₁₈)-Alkenylrest, einem geradkettigen oder verzweigtkettigen (C₂-C₁₈)-Alkinylrest oder einem geradkettigen oder verzweigtkettigen (C₁-C₆)-Alkoxyrest) steht.

Die erfindungsgemäßen Oligomere bzw. Polymere können insbesondere in der Form einer kolloiden Suspension (Sole, Gele) in geeigneten Lösungsmitteln, vorzugsweise Tetrahydrofuran, Dioxan, Dialkylether, Petrolether, Hexanfraktion, Benzol, Toluol und Mesitylen, vorliegen.

Ein weiterer Gegenstand der vorliegenden Erfindung betrifft ein Verfahren zur Herstellung der erfindungsgemäßen Oligomere bzw. Polymere, welches den Schritt des Umsetzens von Cyanursäure und/oder Cyamelursäure mit Tetraalkylorthosilikat oder mit einem entsprechend ein-, zwei- oder dreifach substituierten Alkoxylsilan umfasst.

Alternativ können die erfindungsgemäßen Oligomere bzw. Polymere durch ein Verfahren hergestellt werden, welches den Schritt des Umsetzens eines Tris(trialkylsilyl)cyanurats und/oder Tris(trialkylsilyl)cyamelurats mit Siliciumtetrachlorid oder mit einem entsprechend ein-, zwei- oder dreifach substituierten Chlorsilan umfasst.

An die vorstehenden Verfahren kann sich gegebenenfalls noch eine nachgeschaltete Polymerisation oder Quervernetzung durch Hydrolyse oder Ammonolyse der entsprechenden Halogen- oder Alkoxyendgruppen enthaltenden Derivate anschließen.

Noch ein weiterer Gegenstand der vorliegenden Erfindung ist die Verwendung der erfindungsgemäßen Oligomere bzw. Polymere als stationäre Phase für die Chromatographie, als mikroporöses Filtermaterial, als Speichermedium für Flüssigkeiten und Gase, als Katalysator und/oder Katalysatorträger für die heterogene Katalyse, als Flammschutzmittel, insbesondere für Kunststoffe, Textilien, Holzprodukte, Papier, Kartonagen, Verputze, Dämmstoffe und Baustoffverbünde, zur Herstellung polymerer Schäume oder zur Herstellung von Werkstoffen und Bauteilen, bei denen deren optische, akustische, magnetische oder (opto)elektronische Eigenschaften nutzbar gemacht werden.

Ferner können die erfindungsgemäßen Oligomere bzw. Polymere im Rahmen von Sol-Gel-Verfahren zur Herstellung von Beschichtungen, Formkörpern und Pulvern, Aerogelen und Xerogelen vorgesehen werden, insbesondere dann wenn die erfindungsgemäßen Oligomere bzw. Polymere in der Form einer kolloiden Suspension (Sole, Gele) vorliegen, wie vorstehend ausgeführt.

Figur 1 beschreibt den Aufbau der erfindungsgemäßen Oligomere bzw. Polymere durch Kombination der Bausteine **A** (SiOₓR₄₋ₓ Tetraeder) und **B** (s-Heptazingruppe oder s-Triazingruppe).

Die grundsätzliche Konstitution der erfindungsgemäßen Oligomere bzw. Polymere geht aus Figur 1 hervor. Nach dem erfindungsgemäßen Verfahren können auch Polymere aus komplizierteren Chlorsilanen gewonnen werden, beispielsweise α,ω -Dichlorsilanen oder verbrückten Chlorsilanen des Typs CIR^{a}R^{b}Si-R^{c}-SiR^{d}R^{e}Cl, wobei R^{a} und R^{b} wie vorstehend definiert sind und R^{d} und R^{e} wie R^{a} und R^{b} definiert sind, während R^{c} aus einem geradkettigen oder verzweigtkettigen (C₂-C₁₈)-Alkenylrest, einem geradkettigen oder verzweigtkettigen (C₂-c₁₈)-Alkinylrest oder einem unsubstituierten oder substituierten (C₆-C₁₀)-Arylenrest ausgewählt ist, wobei der eine oder mehrere Substituenten aus der Gruppe β ausgewählt ist bzw. sind (vgl. Figur 2). Figur 2 verdeutlicht die Modifizierung der erfindungsgemäßen Polymere durch den Einsatz unterschiedlich funktionalisierter Chlorsilane.

Je nach Herstellungsverfahren können die Polymere signifikante Mengen an Endgruppen (z.B. Chlor- und Trimethylsiloxygruppen) enthalten, ohne die grundsätzliche Struktur sowie die Eigenschaften der erfindungsgemäßen Polymere signifikant zu beeinflussen. Die chemische Struktur und die Morphologie der erfindungsgemäßen Polymere hängen von den angewendeten Synthesebedingungen ab. Unter geeignet gewählten Bedingungen entstehen Gele, die sich in Xerogele und Aerogele umwandeln lassen. Letztere sind durch eine sehr große spezifische Oberfläche und Poren im Mikro- (< 2 nm) und/oder Mesobereich (2-50 nm) gekennzeichnet.

Hochporöse Netzwerkstrukturen, bei denen Übergangsmetall-Sauerstoff-Polyeder über mehrzähnige, zumeist steife aromatische Liganden durch ionische Wechselwirkungen verknüpft sind, sogenannte "Metal Organic Frameworks" (MOFs) werden seit wenigen Jahren intensiv erforscht und sind auch Gegenstand eines erheblichen kommerziellen Interesses. MOFs können zur Gasspeicherung, als Katalysatoren in der Synthesechemie und Sensormaterialien verwendet werden. Derzeit sind industrielle Pilotanlagen bereits im Einsatz. In manchen dieser Anwendungen könnten die erfindungsgemäßen Netzwerke aufgrund ihrer hohen thermischen Stabilität den MOFs überlegen sein, indem sie z.B. höhere Temperaturen bei Synthesereaktionen zulassen.

Die erfindungsgemäßen Polymere sind in der Regel farblos (weiss) und opak und durch gezielten Einbau farbiger Komponenten modifizierbar. Die Polymere neigen zur Hydrolyse, weshalb sie sich auch für die Erzeugung bioabbaubarer anorganisch-organischer Werkstoffe eignen.

Die erfindungsgemäßen Polymere lassen sich prinzipiell auf unterschiedlichen Wegen synthetisieren. Als Ausgangsstoffe entsprechend erfindungsgemäßer Siliciumcyanurate bzw. - cyamelurate eignen sich z.B. die Säurehalogenide C₃N₃Cl₃, C₃N₃F₃ oder C₆N₇Cl₃, welche sich mit löslichen Metallsilikaten, Alkoxysilanen oder Siloxysilanen umsetzen lassen. Weiterhin können die "Orthosäuren" Cyanursäure C₃N₃O₃H₃ und Cyamelursäure C₆N₇O₃H₃ und deren Alkylammoniumsalze mit Alkoxysilanen oder Chlorsilanen zur Reaktion gebracht werden.

Besonders vorteilhaft sind Umsetzungen, bei denen die Poly(s-heptazinsiloxane) bzw. Poly(s-triazinsiloxane) über Austauschreaktionen aus Tris(trialkylsilyl)-cyamelursäureestem, z.B. (C₆N₇(OSiMe₃)₃) bzw. Tris(trialkylsilyl)-cyanursäureestern, z.B. (C₃N₃(OSiMe₃)₃), synthetisiert werden. Typische Ergebnisse und die zugehörigen Reaktionsgleichungen finden sich nachstehend in den Beispielen.

Die Produkte fallen in hohen Ausbeuten an. Bemerkenswert ist darüber hinaus, dass unter geeigneten Bedingungen (nicht zu große Verdünnung und ohne Rühren) phänomenologisch ein Sol-Gel-Prozeß abläuft. Dabei verfestigt sich die homogene Lösung relativ plötzlich am sog. Gelpunkt. Anschließend setzt ein Alterungsprozeß ein, der meist durch fortgesetzte Kondensationsreaktionen und Synärese gekennzeichnet ist. Je nach Edukten, Ansatzgröße und Druck- und Temperaturbedingungen ist die erforderliche Reaktionszeit sehr unterschiedlich. Gemäß der vorliegenden Erfindung können die erfindungsgemäßen Oligomere bzw. Polymere in reiner (auch kristalliner) Form bereitgestellt werden.

Im Rahmen der vorliegenden Erfindung ist eingeschlossen, dass die entsprechenden Verbindungen als endgruppenhaltige Oligomere bzw. Polymere vorliegen. Des weiteren sind entsprechende Kombinationen der erfindungsgemäßen Oligomere bzw. Polymere eingeschlossen.

Die vorliegende Erfindung wird durch die nachstehenden, nicht-beschränkenden Beispiele weiter erläutert.

### Beispiele

Alle Reaktionen wurden unter Schutzgas mit Schlenk- und Glovebox-Technik durchgeführt. Es wurden kommerziell (Aldrich) erhältliche Chlorsilane verwendet. Die Trimethylsilylester der Cyamelursäure sowie der Cyanursäure wurden entsprechend Y.I. Dergunov, I.A. Vostokov, A.S. Gordetsov, V.A. Gal'perin, Silylation and stannylation of cyanuric acid, Zhumal Obshchei Khimii (1976), 46(7), 1573-6. b) Yu. I. Dergunov, A. S. Gordetsov, I. A. Vostokov, E. N. Boitsov, Silylation and stannylation of cyameluric acid, Zhumal Obshchei Khimii, 46 (1976), 1653-4. synthetisiert.

Figur 3 beschreibt die allgemeine (idealisierte) Reaktion, die den nachstehenden Beispielen 1 bis 7 zugrunde liegt, wobei Δ = C₃N₃, C₆N₇ und R = CH₃ und x = 0, 1, 2 ist.

### Beispiel 1 : Δ = C₃N₃ , x = 0 , als Sol-Gel Reaktion

In zwei Schlenkgefäßen (25 ml) mit Magnetrührstab wurden je 346 mg (1 mmol) C₃N₃(OSiMe₃)₃ in 5 ml trockenem THF gelöst. Zu der Lösung wurden 88 µl (0,77 mmol) SiCl₄ zugetropft und die verschlossenen Gefäße bei Raumtemperatur (Ansatz **1A**) bzw. 45°C (Ansatz **1B**) ohne weiteres Rühren gelagert.

Nach ca. 24 h war Ansatz **1B** zu einem Gel erstarrt. Nach zwei weiteren Tagen konnte eine geringe Schrumpfung des Gelkörpers und Ausscheidung der flüssigen Phase (Synärese) beobachtet werden.

Bei Ansatz **1A** trat nach drei Tagen eine Trübung des Reaktionsansatzes ein, nach sechs Tagen wurde ein steifes Gel erhalten, welches an den darauf folgenden Tagen Synärese zeigte.

### Beispiel 2 : Δ = C₃N₃ , x = 1 , als Sol-Gel Reaktion

In zwei Schlenkgefäßen (25 ml) mit Magnetrührstab wurden je 173 mg (0,5 mmol) C₃N₃(OSiMe₃)₃ in 4 ml trockenem THF gelöst. Zu der Lösung wurden 58 µl (0,5 mmol) CH₃SiCl₃ zugetropft und die verschlossenen Gefäße bei Raumtemperatur (Ansatz **2A**) bzw. 45°C (Ansatz **2B**) ohne weiteres Rühren gelagert.
Bei Ansatz **2A** trat nach drei Stunden eine Trübung des Reaktionsansatzes ein, nach sechs Tagen wurde ein fließfähiges Gel erhalten, welches an den darauf folgenden Tagen zunehmende Synärese zeigte.

Bei Ansatz 2B trat nach einer Stunde eine Trübung des Reaktionsansatzes ein, nach einem Tag wurde ein steifes Gel erhalten, welches an den darauf folgenden Tagen zunehmende Synärese zeigte.

### Beispiel 3 : Δ = C₃N₃ , x = 2 , als Sol-Gel Reaktion

In einem Schlenkgefäß (25 ml) mit Magnetrührstab wurden 173 mg (0,5 mmol) C₃N₃(OSiMe₃)₃ in 4 ml trockenem THF gelöst. Der Lösung wurden 95 µl (0,079 mmol) (CH₃)₂SiCl₂ zugefügt und das verschlossene Gefäß wurde bei Raumtemperatur ohne weiteres Rühren gelagert.

Nach drei Stunden trat eine Trübung des Reaktionsansatzes ein, nach sechs Tagen hatte sich das Sol noch nicht verfestigt.

### Beispiel 4 : Δ = C₆N₇ , x = 0 , Herstellung als Pulver

In einem Schlenkgefäß (100 ml) mit Magnetrührstab wurde 1 g (2,3 mmol) C₆N₇(OSiMe₃)₃ in trockenem THF gelöst. Hierzu wurden bei Raumtemperatur 0,39 ml (3,4 mmol) SiCl₄ zugegeben und die Reaktionsmischung 55 h unter Rückfluß gekocht. Die weißliche Suspension wurde anschließend eingeengt und die Reaktionsnebenprodukte und Lösungsmittelreste bei 100°C im Vakuum entfernt. Es wurde ein beiger Feststoff erhalten. Ausbeute 113% d.T.; IR (cm⁻¹, KBr-Preßling): 448 (m), 791 (m), 1015 (m); 1099 (s), 1160 (m), 1261 (m), 1460 (vs), 1655 (vs), 2961(m).

Pyrolyse: 350 mg des erhaltenen Produkts wurden in einem Quarzglasrohr für 2 h bei 550°C ausgelagert. Es wurden 292 mg eines schwarzen Feststoffes zurückerhalten (16% Gewichtsverlust). Das Röntgenpulverdiffraktogramm dieser Substanz zeigte breite Reflexe einer neuen Phase bei 2,82 ; 3,62 ; 4,13 und 4,96 Å, wobei letzterer der intensitätsstärkste Peak ist. Das Vorhandensein der C₆N₇-Fragmente nach der Temperaturbehandlung zeigte sich anhand deren charakteristischen Banden bei 1633, 1448 und 800 cm-1 im IR-Spektrum. Zudem trat wie auch im unpyrolysierten Zustand eine starke Si-O-C Bande bei 1095 cm⁻¹ auf.

### Beispiel 5 : Δ = C₆N₇ , x = 0 , als Sol-Gel Reaktion

In zwei Schlenkgefäßen (25 ml) mit Magnetrührstab wurden 525 mg (1,2 mmol) C₆N₇(OSiMe₃)₃ in 7 bzw. 5 ml trockenem THF gelöst. Zu der Lösung wurden 102 µl (0,89 mmol) bzw. 350 µl (3 mmol) SiCl₄ zugetropft. Die beiden Ansätze wurden anschließend ohne weiteres Rühren bei Raumtemperatur bzw. 45°C gelagert.

Bereits nach ≤ 5 min wurde in beiden Fällen ein steifes Gel erhalten. Synärese trat bei dem temperierten Ansatz nach 6 h, bei Raumtemperatur nach ca. einem Tag ein. Die Gelkörper schrumpften über mehrere Tage.

### Beispiel 6 : Δ = C₆N₇ , x = 1 , als Sol-Gel Reaktion

In ein Schlenkgefäßen (25 ml) mit Magnetrührstab wurden 220 mg (0,5 mmol) C₃N₃(OSiMe₃)₃ in 4 ml trockenem THF gelöst. Zu der Lösung wurden 59 µl (0,5 mmol) CH₃SiCl₃ zugetropft und die verschlossenen Gefäße bei Raumtemperatur ohne weiteres Rühren gelagert.

Bereits nach 5 min wurde ein steifes Gel erhalten. Synärese setzte nach etwa drei Tagen ein.

### Beispiel 7 : Δ = C₆N₇ , x = 2 , Herstellung als Pulver

In einem Schlenkgefäß (100 ml) mit Magnetrührstab wurde 1 g (2,3 mmol) C₆N₇(OSiMe₃)₃ in trockenem THF gelöst. Hierzu wurden bei Raumtemperatur 0,41 ml (3,4 mmol) (CH₃)₂SiCl₂ zugegeben und die Reaktionsmischung 30 h unter Rückfluß gekocht. Die weißliche Suspension wurde anschließend eingeengt und die Reaktionsnebenprodukte und Lösungsmittelreste bei 100°C im Vakuum entfernt, wobei sich ein hellbrauner Feststoff bildete, Ausbeute 105% d.T..
IR (cm⁻¹,KBr-Preßling): 802 (vs), 1090 (vs); 1261 (vs), 1454 (m), 1653 (vs), 2957 (m).
Elementaranalyse:

| [Masse %] | C | H | N | Si | O | Cl |
|---|---|---|---|---|---|---|
| Messung 1 | 34,7 | 3,79 | 26,9 | 12,1 | 18,3 | 1,9 |
| Messung 2 | 34,4 | | 27,7 | | 19,2 | |
| berechnet* | (35,40) | (2,97) | (32,11) | (13,8) | (15,72) | (0,0) |

| | | | | | | |
|---|---|---|---|---|---|---|
| * für [(Si(CH₃)₂)_{1,5}(C₆N₇O₃)]ₙ | | | | | | |

Das Röntgenpulverdiffraktogramm dieser Substanz zeigte breite Reflexe einer neuen Phase mit Intensitätsmaxima bei 3,16; 3,69 ; 4,09 ; 4,98 und 7,49 Å.

### Beispiel 8 : Δ = C₆N₇ , x = 2 , als Sol-Gel Reaktion

In einem Schlenkgefäß (25 ml) mit Magnetrührstab wurden 114 mg (0,026 mmol) C₆N₇(OSiMe₃)₃ in 2 ml trockenem THF gelöst. Zu der Lösung wurden 47 µl (0,39 mmol) (CH₃)₂SiCl₂ zugetropft und das verschlossenen Gefäß bei Raumtemperatur ohne weiteres Rühren gelagert.

Nach einer Stunde trat eine Trübung des Reaktionsansatzes ein, nach sechs Tagen hatte sich das Sol noch nicht verfestigt.

### Beispiel 9: Herstellung einer Schicht von Tris(chlordimethylsilyl)cyamelurat aus {(ClSi(CH₃)₂)ₓ(Si(CH₃)₂O)_{1,5-(x/2)}(C₆N₇)}ₙ durch hydrolytische Kopplung von (C₆N₇O₃)(Si(CH₃)₂Cl)₃:

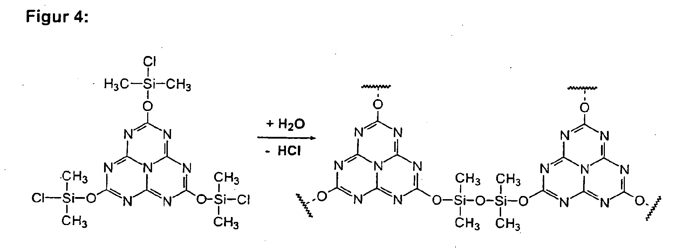

Die Reaktionsgleichung ist in Figur 4 beschrieben.
In einem Schlenkgefäß (50 ml) mit Magnetrührstab wurde zu 1 g (2,3 mmol) C₆N₇(OSiMe₃)₃ bei Raumtemperatur 12 ml (99 mmol) (CH₃)₂SiCl₂ zugegeben; danach wurde die Reaktionsmischung 10h unter Rückfluß gekocht. Anschließend wurde das überschüssige Chlorsilan und (CH₃)₃SiCl bei 100°C im Vakuum entfernt. Dabei wird ein weißer Feststoff erhalten, Ausbeute 68,4% d.T.. Schmelzpunkt: 206 °C, bei 330°C tritt Zersetzung ein.

In einer Schutzgasbox mit < 0,1 ppm H₂O wurde eine kleinen Menge des erhaltenen Produktes in THF verrieben. Die so erhaltene Suspension wurde auf eine einkristalline KBr-Platte aufgetragen. Diese Platte wurde ausgeschleust und die an der feuchten Umgebungsluft stattfindende, im obigen Schema skizzierte hydrolytische Polymersation mittels FT-IR-Spektroskopie beobachtet. Dabei nahm die Si-O-Si Schwingungsbande um 1080 cm⁻¹ innerhalb von 40 Minuten an Intensität zu.

### Beispiel 11 : Δ = C₆N₇ , x = 2 , als Sol-Gel Reaktion

In einem Schlenkgefäß (25 ml) mit Magnetrührstab wurden 114 mg (0,026 mmol) C₆N₇(OSiMe₃)₃ in 2 ml trockenem THF gelöst. Zu der Lösung wurden 47 µl (0,39 mmol) (CH₃)₂SiCl₂ zugetropft und das verschlossenen Gefäß bei Raumtemperatur ohne weiteres Rühren gelagert. Nach einer Stunde trat eine Trübung des Reaktionsansatzes ein, nach sechs Tagen hatte sich das Sol noch nicht verfestigt.

## Patentansprüche

1. Oligomer bzw. Polymer, umfassend mindestens eine Struktureinheit, ausgewählt aus der Gruppe, bestehend aus Siliciumcyanuraten, [Si₃(C₃N₃O₃)₄]ₙ, Siliciumcyameluraten, [S₁₃(C₆N₇O₃)₄]ₙ, Silylcyanuraten, [Si(R^{a}R^{b})_{1,5}(C₃N₃O₃)]ₙ, Silylcyameluraten, [Si(R^{a}R^{b})_{1,5}(C₆N₇O₃)]ₙ, Silsesquicyanuraten, [Si(R^{a})(C₃N₃O₃)]ₙ, und Silsesquicyameluraten, [Si(R^{a})(C₆N₇O₃)]ₙ, wobei
n eine ganze Zahl zwischen 1 und ∞ ist und
R^{a} und R^{b} unabhängig voneinander ausgewählt sind aus der Gruppe α, bestehend aus Wasserstoff, Halogen, Hydroxy, einem geradkettigen oder verzweigtkettigen (C₁-C₁₈)-Alkylrest, einem (C₃-C₇)-Cycloalkylrest, einem geradkettigen oder verzweigtkettigen (C₁-C₁₈)-Alkenylrest, einem geradkettigen oder verzweigtkettigen (C₁-C₁₈)-Alkinylrest, einem geradkettigen oder verzweigtkettigen (C₁-C₆)-Alkoxyrest, Furyl, Furanyl, Benzofuranyl, Thienyl, Thiazolyl, Benzothiazolyl, Thiadiazolyl, Imidazolyl, Pyrazolyl, Triazolyl, Tetrazolyl, Pyrazinyl, Pyrrolidinyl, Pyrimidinyl, Imidazolinyl, Pyrazolidinyl, Phenyl, Phenoxy, Benzyl, Benzyloxy, Naphthyl, Naphthoxy oder Pyridyl, die jeweils mit ein bis fünf Substituenten, unabhängig voneinander ausgewählt aus der Gruppe β, bestehend aus einem geradkettigen oder verzweigtkettigen (C₁-C₆)-Alkylrest, einem (C₃-C₇)-Cycloalkylrest, einem geradkettigen oder verzweigtkettigen (C₁-C₆)-Alkoxyrest, Halogen, Hydroxy, Amino, Di(C₁-C₆)alkylamino, Nitro, Cyan, Benzyl, 4-Methoxybenzyl, 4-Nitrobenzyl, Phenyl, und 4-Methoxyphenyl, substituiert sein können.

2. Oligomer bzw. Polymer gemäß Anspruch 1, welches eine siliciumzentrierte, dendritische Verbindung erster oder davon abgeleiteter höherer Generation ist.

3. Oligomer bzw. Polymer gemäß Anspruch 1, welches eine cyanurat- oder cyameluratzentrierte, dendritische Verbindung erster oder davon abgeleiteter höherer Generation ist.

4. Oligomer bzw. Polymer gemäß Anspruch 1, welches ein derivatisiertes Silylcyanurat, ([Si(R^{a}R^{b})-R^{d}-Si(R^{e}R^{f})]_{1,5}[C₃N₃O₃])ₙ oder ein derivatisiertes Silylcyamelurat, ([Si(R^{a}R^{b})-R^{d}-Si(R^{e}R^{f})]_{1,5}[C₆N₇O₃])ₙ, ist, wobei n, R^{a}, R^{b}, R^{e} und R^{f} unabhängig voneinander wie vorstehend R^{a} und R^{b} definiert sind und wobei R^{d} für eine SiR^{a}R^{b} Gruppe, ein Chalkogenatom, insbesondere ein Sauerstoffatom, eine (C₁-C₆)-Alkylengruppe, insbesondere Methylen, eine (C₆-C₁₀)-Arylengruppe, insbesondere Phenylen, oder eine R^{g}X-Brücke (X = Element der dritten oder fünften Hauptgruppe und R^{g} ausgewählt aus Wasserstoff, Halogen, Hydroxy, einem geradkettigen oder verzweigtkettigen (C₁-C₁₈)-Alkylrest, einem (C₃-C₇)-Cycloalkylrest, einem geradkettigen oder verzweigtkettigen (C₂-C₁₈)-Alkenylrest, einem geradkettigen oder verzweigtkettigen (C₂-C₁₈)-Alkinylrest oder einem geradkettigen oder verzweigtkettigen (C₁-C₆)-Alkoxyrest) steht.

5. Oligomer bzw. Polymer gemäß einem der Ansprüche 1 bis 4 in der Form einer kolloiden Suspension.

6. Verfahren zur Herstellung der Oligomere bzw. Polymere gemäß einem der Ansprüche 1 bis 5, welches den Schritt des Umsetzens von Cyanursäure und/oder Cyamelursäure mit Tetraalkylorthosilikat oder mit einem entsprechend ein-, zwei- oder dreifach substituierten Alkoxylsilan umfasst.

7. Verfahren zur Herstellung der Oligomere bzw. Polymere gemäß einem der Ansprüche 1 bis 5, welches den Schritt des Umsetzens eines Tris(trialkylsilyl)cyanurats und/oder Tris(trialkylsilyl)cyamelurats mit Siliciumtetrachlorid oder mit einem entsprechend ein-, zwei- oder dreifach substituierten Chlorsilan umfasst.

8. Verwendung der Oligomere bzw. Polymere gemäß einem der Ansprüche 1 bis 5 als stationäre Phase für die Chromatographie, als mikroporöses Filtermaterial, als Speichermedium für Flüssigkeiten und Gase, als Katalysator und/oder Katalysatorträger für die heterogene Katalyse, als Flammschutzmittel, insbesondere für Kunststoffe, Textilien, Holzprodukte, Papier, Kartonagen, Verputze, Dämmstoffe und Baustoffverbünde, zur Herstellung polymerer Schäume oder zur Herstellung von Werkstoffen und Bauteilen, bei denen deren optische, akustische, magnetische oder (opto)elektronische Eigenschaften nutzbar gemacht werden.

## Claims

1. An oligomer or polymer comprising at least one structural unit selected from the group consisting of silicon cyanurates [Si₃(C₃N₃O₃)₄]ₙ, silicon cyamelurates [Si₃(C₆N₇O₃)₄]ₙ, silyl cyanurates [Si(R^{a}R^{b})_{1,5}(C₃N₃O₃)]ₙ, silyl cyamelurates [Si(R^{a}R^{b})_{1,5}(C₆N₇O₃)]ₙ, silsesqui-cyanurates [Si(R^{a})(C₃N₃O₃)]ₙ, and silsesqui-cyamelurates [Si(R^{a})(C₆N₇O₃)]ₙ, wherein
n is an integer of between 1 and ∞, and
R^{a} and R^{b} are selected independently from each other from the group α consisting of hydrogen, halogen, hydroxy, a straight-chain or branched-chain (C₁-C₁₈) alkyl residue, a (C₃-C₇) cycloalkyl residue, a straight-chain or branched-chain (C₁-C₁₈) alkenyl residue, a straight-chain or branched-chain (C₁-C₁₈) alkinyl residue, a straight-chain or branched-chain (C₁-C₆) alkoxy residue, furyl, furanyl, benzofuranyl, thienyl, thiazolyl, benzothiazolyl, thiadiazolyl, imidazolyl, pyrazolyl, triazolyl, tetrazolyl, pyrazinyl, pyrrolidinyl, pyrimidinyl, imidazolinyl, pyrazolidinyl, phenyl, phenoxy, benzyl, benzyloxy, naphthyl, naphthoxy or pyridyl, which may be substituted each by one to five substituents selected independently from each other from the group β consisting of a straight-chain or branched-chain (C₁-C₆) alkyl residue, a (C₃-C₇) cycloalkyl residue, a straight-chain or branched-chain (C₁-C₆) alkoxy residue, halogen, hydroxy, amino, Di(C₁-C₆)alkylamino, nitro, cyan, benzyl, 4-methoxybenzyl, 4-nitrobenzyl, phenyl and 4-methoxyphenyl.

2. The oligomer or polymer according to claim 1, which is a silicon-centered, dendritic compound of a first generation, or a higher generation derived therefrom.

3. The oligomer or polymer according to claim 1, which is a cyanurate-centered or a cyamelurate-centered dendritic compound of a first generation, or a higher generation derived therefrom.

4. The oligomer or polymer according to claim 1, which is a derivatized silyl cyanurate ([Si(R^{a}R^{b})-R^{d}-Si(R^{e}R^{f})]_{1,5}[C₃N₃O₃])ₙ, or a derivatized silyl cyamelurate ([Si(R^{a}R^{b})-R^{d})-Si(R^{e}R^{f})]_{1,5}[C₆N₇O₃])ₙ, wherein n, R^{a}, R^{b}, R^{e} and R^{f} are defined independently from each other as R^{a} and R^{b} above, and wherein R^{d} represents an SiR^{a}R^{b} group, a chalcogen atom, in particular an oxygen atom, a (C₁-C₆) alkylen group, in particular methylen, a (C₆-C₁₀) arylen group, in particular phenylen, or a R^{g}X bridge (X = an element from the third or fifth main group, and R^{g} is selected from hydrogen, halogen, hydroxy, a straight-chain or branched-chain (C₁-C₁₈) alkyl residue, a (C₃-C₇) cycloalkyl residue, a straight-chain or branched-chain (C₂-C₁₈) alkenyl residue, a straight-chain or branched-chain (C₂-C₁₈) alkinyl residue, or a straight-chain or branched-chain (C₁-C₆) alkoxy residue).

5. The oligomer or polymer according to any one of claims 1 through 4, in the form of a colloidal suspension.

6. A method of manufacturing the oligomers or polymers according to any one of claims 1 through 5, comprising the step of converting cyanuric acid and/or cyameluric acid with tetraalkyl orthosilicate or a correspondingly monosubstituted, disubstituted or trisubstituted alkoxysilane.

7. The method of manufacturing the oligomers or polymers according to any one of claims 1 through 5, comprising the step of converting a tris(trialkylsilyl)cyanurate and/or tris(trialkylsilyl)cyamelurate with silicontetrachloride or a correspondingly monosubstituted, disubstituted or trisubstituted chlorosilane.

8. Use of the oligomers or polymers according to any one of claims 1 through 5 as a stationary phase for chromatography, as a microporous filter material, as a storage medium for liquids and gases, as a catalyst and/or catalyst carrier for heterogenous catalysis, as a flameproofing agent, in particular for plastics, textiles, wood products, paper, cardboard articles, wall plasters, insulating materials and building material composites, for manufacturing polymer foams or for manufacturing materials and constructional elements in which the optical, acoustical, magnetic or (opto)electronic properties thereof are exploited.

## Revendications

1. Oligomère ou polymère comprenant au moins une unité de structure, sélectionné dans le groupe composé de cyanurates de silicium, [Si₃(C₃N₃O₃)₄]ₙ, de cyamélurates de silicium, [Si₃(C₆N₇O₃)₄]ₙ, de cyanurates de silyl, [Si(R^{a}R^{b})_{1,5}(C₃N₃O₃)]ₙ, de cyamélurates de silyl, [Si(R^{a}R^{b})_{1,5}(C₆N₇O₃)]ₙ, de silsesquicyanurates, [Si(R^{a})(C₃N₃O₃)]ₙ et de silsesquicyamélurates, [Si(R^{a})(C₆N₇O₃)]ₙ, sachant que
n est un nombre entier entre 1 et ∞ et
R^{a} et R^{b} sont sélectionnés indépendamment l'un de l'autre dans le groupe α composé d'hydrogène, d'halogène, d'hydroxy, d'un alkyle (C₁-C₁₈) en chaîne linéaire ou ramifiée, d'un cycloalkyle (C₃-C₇), d'un alkényle (C₁-C₁₈) en chaîne linéaire ou ramifiée, d'un alkinyle (C₁-C₁₈) en chaîne linéaire ou ramifiée, d'un alkoxy (C₁-C₆) en chaîne linéaire ou ramifiée, de furyle, de furanyle, de benzofuranyle, de thienyle, de thiazolyle, de benzothiazolyle, de thiadiazolyle, d'imidazolyle, de pyrazolyle, de triazolyle, de tetrazolyle, de pyrazinyle, de pyrrolidinyle, de pyrimidinyle, d'imidazolinyle, de pyrazolidinyle, de phényle, de phénoxy, de benzyle, de benzyloxy, de naphtyle, de naphthoxy ou de pyridyle, pouvant chacun être substitués par un à cinq substituants sélectionnés indépendamment l'un de l'autre dans le groupe β composé d'un alkyle (C₁-C₆) en chaîne linéaire ou ramifiée, d'un cycloalkyle (C₃-C₇), d'un alkoxy (C₁-C₆) en chaîne linéaire ou ramifiée, d'halogène, d'hydroxy, d'amino, d'alkylamino Di(C₁C₆), de nitro, de cyan, de benzyle, de 4-méthoxybenzyle, de 4-nitrobenzyle, de phényle et de 4-méthoxyphényle.

2. Oligomère ou polymère selon la revendication 1, qui est une liaison dendritique centrée sur le silicium, de première génération ou de génération supérieure dérivée de celle-ci.

3. Oligomère ou polymère selon la revendication 1, qui est une liaison dendritique centrée sur le cyanurate ou le cyamélurate, de première génération ou de génération supérieure dérivée de celle-ci.

4. Oligomère ou polymère selon la revendication 1, qui est un cyanurate de silyl dérivatisé, ([Si(R^{a}R^{b})-R^{d}-Si(R^{e}R^{f})]_{1,5}[C₃N₃O₃])ₙ ou un cyamélurate de silyl dérivatisé, ([Si(R^{a}R^{b})-R^{d}-Si(R^{e}R^{f})]_{1,5}[C₆N₇O₃])ₙ, n, R^{a}, R^{b}, R^{e} et R^{f} étant définis indépendamment l'un de l'autre comme précédemment R^{a} et R^{b}, et R^{d} représentant un groupe SiR^{a}R^{b}, un atome chalcogène, en particulier un atome d'oxygène, un groupe d'alkyles(C₁-C₆), en particulier de méthyles, un groupe d'aryles(C₆-C₁₀), en particulier de phényles, ou un pont R^{g}X (X = élément du troisième ou du cinquième groupe principal et R^{g} sélectionné parmi l'hydrogène, l'halogène, l'hydroxy, un alkyle (C₁-C₁₈) en chaîne linéaire ou ramifiée, un cycloalkyle (C₃-C₇), un alkényle (C₂-C₁₈) en chaîne linéaire ou ramifiée, un alkinyle (C₂-C₁₈) en chaîne linéaire ou ramifiée, ou un alkoxy (C₁-C₆) en chaîne linéaire ou ramifiée).

5. Oligomère ou polymère selon l'une des revendications 1 à 4, ayant la forme d'une suspension colloïde.

6. Procédé de fabrication des oligomères ou des polymères selon l'une des revendications 1 à 5, comprenant l'étape de réaction d'acide cyanurique et/ou d'acide cyamélurique avec du tétraalkylorthosilicate ou avec un alkoxylsilane à simple, double ou triple substitution selon le cas.

7. Procédé de fabrication des oligomères ou des polymères selon l'une des revendications 1 à 5, comprenant l'étape de réaction d'un tris(trialkylsilyl)cyanurate et/ou tris(trialkylsilyl)cyamélurate avec du tétrachlorure de silicium ou avec un silane de chlore à simple, double ou triple substitution selon le cas.

8. Utilisation des oligomères ou des polymères selon l'une des revendications 1 à 5 comme phase stationnaire pour la chromatographie, comme matériau filtrant microporeux, comme fluide de stockage pour liquides et gaz, comme catalyseur et/ou support de catalyseur pour la catalyse hétérogène, comme agent pare-flammes, en particulier pour matières synthétiques, textiles, produits en bois, papier, cartonnages, crépis, matériaux isolants ou matériaux composites de construction, pour la fabrication de mousses polymères ou pour la fabrication de matériaux et de composants dont les propriétés optiques, acoustiques, magnétiques ou (opto)électroniques sont exploitées.
